**Europäisches Patentamt**

**European Patent Office**

**Office européen des brevets**

(19)

(11) **EP 1 598 377 A1**

(12) ## EUROPEAN PATENT APPLICATION

(43) Date of publication:
**23.11.2005 Bulletin 2005/47**

(51) Int Cl.$^7$: **C08F 10/00**, C08L 23/10

(21) Application number: **04012108.9**

(22) Date of filing: **21.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **BOREALIS POLYMERS OY**
**06101 Porvoo (FI)**

(72) Inventors:
• **Denifl, Peter**
  **6156 Gries Am Brenner (AT)**

• **Leinonen, Timo**
  **06750 Tolkkinen (FI)**
• **Vestberg, Torvald**
  **06100 Porvoo (FI)**

(74) Representative: **Kador & Partner**
**Corneliusstrasse 15**
**80469 München (DE)**

(54) **Process for producing heterophasic alpha-olefin polymers**

(57)     The present invention relates to novel processes for producing heterophasic alpha-olefin compositions, and more specifically to copolymer compositions of propylene produced in a multi-stage process using specified catalysts. The polymers obtained from the process have uniform quality and properties which make them suitable for a wide range of applications.

Figure 4

EP 1 598 377 A1

Printed by Jouve, 75001 PARIS (FR)

**Description**

The present invention relates to a process for producing heterophasic poly-α-olefin compositions and especially heterophasic copolymer compositions of propylene having uniform quality with desired properties, and being suitable for a wide range of applications.

It is known that polypropylene polymers in particular have suitable resistance to heat and chemicals as well as have attractive mechanical properties. Further, it is known that desired properties, e.g. stiffness and impact strength properties of polypropylene can be achieved by copolymerizing propylene with ethylene or other α-olefin monomers and optionally by adding elastomeric components to the copolymer matrix. Polypropylene copolymers can thus be used as alternatives e.g. for poly(vinylchloride) (PVC). Further, polypropylene polymers are very suitable in wide range of applications.

The term heterophasic copolymers of propylene is understood to include polypropylene copolymers consisting of different polymer types and may contain ethylene and/or higher α-olefins as comonomers. A heterophasic polymer generally comprises a propylene matrix part and a propylene rubber part comprising propylene/ethylene and/or a higher α-olefin copolymer. The rubber part may be called e.g. propylene-ethylene rubber or sometimes an elastomeric part of the polymer.

Propylene copolymer compositions, and now also propylene heterophasic compositions, are generally prepared in a multistage polymerization process comprising one or more slurry and/or one or more gas phase reactors in the presence of a high activity, supported, Ziegler Natta catalyst system comprising a catalyst component containing a compound of a transition metal belonging to groups 4 to 6 of the Periodic Table of Elements (IUPAC 1990), and a cocatalyst compound based on an organic compound of a metal belonging to any of groups 1 to 3 and 13 of said Table. Typical compounds of transition metals are the chlorides, especially the tetrachlorides of titanium. Typical organometallic cocatalysts are organoaluminium compounds such as aluminium alkyl compounds and especially trialkyl aluminiums. In addition the catalyst system comprises internal and external electron donors. The external donors act as stereoregulating agents. Typical internal electron donors are dialkyl phthalates and typical external electron donors are alkyl alkoxy silanes.

The Ziegler Natta catalysts commonly used are supported on an external support or carrier. Typical supports are magnesium dichloride and silica.

Before use in the actual polymerization step the catalysts may be prepolymerized. The catalysts may also be modified, e.g. by using vinyl compounds.

According to common knowledge, the catalyst components are supported on an external support or carrier in order to provide solid, high activity catalyst compositions. Because the catalyst component is supported on the surface of the carrier, it is advantageous for the carrier or support to be very porous and thus have a large surface area so that the final catalyst particles contain as many active sites as possible. If this is not the case, the activity of the catalyst is poor.

Heterophasic propylene copolymers are produced in a multiphase polymerization process comprising at least two polymerization stages. Polymer matrix is prepared in the first stage of the polymerization process. The first stage can comprise at least one solution/liquid/slurry phase reactor and/or at least one gas phase reactor(s) or combinations thereof. Very often the first stage comprises one slurry and one gas phase reactor. Slurry reactors can be e.g. bulk reactors. Advanced heterophasic copolymers can be obtained, if one or more additional gas phase reactors, which are often referred to as rubber phase reactors, are used, combined in series with the first stage reactor(s). Copolymerizing of ethylene and/or other higher α-olefins, and propylene in the presence of the polymer matrix from the first stage is carried out in the rubber phase reactor(s), which step forms the second stage of the polymerization process. Examples of heterophasic propylene compounds and processes for producing them are disclosed in EP 991 719 and EP 459 277.

It has hitherto been thought that catalysts with a porous structure, i.e. catalysts supported on an external porous carrier, are necessary and advantageous for producing heterophasic propylene copolymers. This is due to the replica effect, which means that porous catalyst particles produce porous polymer particles. In producing heterophasic polymers according to the prior art technique, it is important that the polymer matrix particles have a porous structure (which is obtained by using porous catalysts), because the rubber is formed or penetrates into the pores of the polymer matrix particles. Thus, in order to be able to produce a heterophasic polymer, i.e. polymer with rubber part, pores are needed.

However, the porous structure of the catalyst and the matrix polymer particles means that the particles are not uniform, and this often leads to a breakdown of some of the bigger particles and thus to the formation of fines. Very small catalyst fragments can act as "hot catalyst particles" causing problems in the process by increasing the amount of rubbery and sticky material formation. In addition, by using the commercial supported, porous catalyst, it has been noted that if the amount of ethylene in the rubber phase is increased, stickiness problems tend to increase.

It occurs, when product from the first reactor is transferred forward e.g. to the flash tank and/or to the gas phase reactor for further polymerizing or, in the rubber reactor itself or when transferring the polymer powder from the rubber reactor in pipelines to silos. The polymer product to be transferred can be "tacky" or "sticky" and adheres to the walls of the reactor and other surfaces in the flash tanks, reactors and pipelines. Stickiness causes problems to the process operability and also the polymer products.

However, the possibility to vary the ethylene comonomer content in the polymer allows a wide range of modifications, whereby avoiding or decreasing the stickiness problems is very desired. A reduction in stickiness problems has been attempted by adding some additives, e.g. antistatic agents into the process. However, this is thought to cause some new problems.

As discussed above, it has, until now, been thought necessary to use a porous catalyst in the process for producing heterophase polypropylene. This is also discussed, for example, in Macromol. chem. phys. 2001, 202, 1987-1994. However, due to the replica effect, there is a clear correlation between the porosity of the catalyst and the effectiveness of the process. Because a porous catalyst has a low bulk density, the polymer produced has a low bulk density as well. Further, a polymer with a low bulk density produced in slurry reactor correlates with the slurry density (solids concentration) of the slurry reactor, and this again effects the through-put of the process, i.e. a high bulk density catalyst is required, if a high bulk density of polymer is desired. Accordingly, the prior art catalysts used for producing heterophasic polymers, as noted above, had a high porosity and low bulk density, which caused a reduction in the bulk density of the polymer.

The solid, non-supported catalyst used in the present invention has a high bulk density, as well as high activity. It has now surprisingly, and contrary to all prior art knowledge, been found that this kind of catalyst can effectively be used in producing heterophasic propylene copolymer compositions. The polymer produced has many desired properties, including high bulk density and desired rubber content. It is also possible to produce polymers with a relatively high rubber content. From a processing point of view, production can be run effectively and many of the problems of the processes of the prior art can be avoided or overcome.

It is believed that most of the benefits of the present invention are based on the phenomena that the active material is distributed evenly through the whole catalyst particles and not only on the surface of the pores of the support material as is the situation with current commercial supported catalysts.

From the processing point of view, the bulk density, which correlates to the slurry density in the first reactor, is high, leading to a higher through-put, i.e. a commercially effective process. By high "slurry density" we mean that the solid content in the reactor is high. This correlation will be discussed in more detail later in this application.

In addition to the benefits of the bulk density, there are less stickiness problems, even where the polymerized copolymer has a high rubber content.

It is an aim of the present invention to provide a novel process for preparing heterophasic α-olefin polymers, especially propylene copolymers, in at least two polymerization stages, the process comprising a first stage for forming a polymer matrix comprising a homopolymer, especially homopropylene or propylene polymer with a small amount of higher α-olefins, such as $C_4$-$C_{12}$ olefins, preferably $C_4$-$C_8$ α-olefins, and more preferably 1-butene, 1-pentene or 1-hexene in slurry and/or optionally in gas phase reactor(s), and additional stages for producing propylene/ethylene/optionally other α-olefin rubber in the presence of the polymer matrix from the first stage in additional gas phase reactor(s), i.e. rubber phase reactor(s) to form heterophasic propylene copolymers.

A further aim of the invention is to provide a novel process for preparing heterophasic propylene copolymers using the above multistage process, which is easy to run continuously with less stickiness-problems and less uneconomical and troublesome cleaning breaks.

Still a further aim is to provide a novel process for producing heterophasic propylene copolymers, which process can be run with a higher slurry phase density and thus a higher through-put. Hence, the present invention provides a more effective and thus a more economical process.

Still yet another object of the present invention is to provide a heterophasic propylene polymer composition having a high rubber content. A high rubber content is understood to mean a rubber content greater than 20 wt% and up to 50 wt%.

Still yet another aim of the invention is to provide a novel process for producing heterophasic propylene copolymers having uniform quality and desired properties. Especially essential is that a desired balance between stiffness and impact properties can be achieved by the process of the present invention.

According to the present invention, there is provided a process for the production of heterophasic polyolefin compositions comprising the steps of

- in a first stage, forming a propylene polymer matrix in at least one slurry reactor and optionally in at least one phase phase reactor;
- in a second stage, copolymerizing propylene with ethylene and/or with another α-olefin in the presence of the polymer matrix in at least one gas phase reactor;

characterised in that:

- the polymerization is carried out in the presence of solid, non-porous catalyst with a surface area of less than 15 $m^2/g$, the catalyst component comprising a compound of a transition metal of Group 3 to 10 of the Periodic Table, or actinide or lanthanide obtainable by a method comprising the steps:

a) forming a liquid/liquid emulsion system, which contains a homogenous solution of at least one catalyst component, said solution being dispersed in a solvent immiscible therewith and forming the dispersed phase of the liquid/liquid emulsion system;
b) solidifying said dispersed droplets to form solid catalyst particles having a predetermined size range; and
c) removing the solvent from the reaction mixture in order to obtain said solid catalyst particles

and, optionally, one or more additional cocatalysts, and external donors; and wherein the polymer produced in said slurry reactor has a bulk density of at least 480 $kg/m^3$.

In accordance with the present invention heterophasic $\alpha$-olefins especially propylene polymers are produced in an at least two stage polymerization process, wherein the first stage comprises the forming of the $\alpha$-olefin polymer, preferably propylene matrix in at least one slurry reactor and optionally in at least one gas phase reactor; and the second stage comprises copolymerization of $\alpha$-olefin, preferably propylene, with ethylene and/or other higher $\alpha$-olefin in the presence of said polymer matrix of the first stage in at least one gas phase reactor acting as a rubber phase reactor. Preferably in the second stage propylene is copolymerized with ethylene.

The catalyst system used in the process of the present invention is a high activity, stereoselective Ziegler-Natta type polymerization catalyst system comprising a solid, catalyst component, cocatalyst and external donor. However, no external support or carrier is used.

Hydrogen can be added both to the bulk and gas phase reactors for controlling the molar mass of the polymer per se.

The catalysts used and their preparation is described in WO publications 03/000754 and 03/000754. The catalyst particles prepared have excellent morphology and good, uniform particle size distribution and due to the replica effect the polymer particles produced by using this catalyst have very good morphology properties, too.

Further, as discussed above, the catalyst used in the present invention, has a non-porous structure with a very low surface area, which makes it surprising that it is so well suitable for producing heterophasic propylene copolymers.

As disclosed above, the olefin polymerization catalyst component used in the present invention, comprises a compound of a transition metal of Group 3 to 10 of the Periodic Table (IUPAC), or of an actinide or lanthanide, and is prepared according to a method comprising

(a) forming a liquid/liquid emulsion system, which contains a homogeneous solution of at least one catalyst component, said solution being dispersed in a solvent immiscible therewith and forming the dispersed phase of the liquid/liquid emulsion system,
(b) solidifying said dispersed droplets to form solid catalyst particles having a predetermined size range,
(c) removing the solvent from the reaction mixture in order to obtain said solid catalyst particles.

The catalyst component includes, in addition to said transition metal compound, also any additional cocatalyst (s), e.g. additional transition metal compounds, and/or activators and/or poison scavengers and/or any reaction product (s) of a transition compound(s) and a cocatalyst(s). Thus the catalyst may be formed in situ from the catalyst components in said solution in a manner known in the art.

A preferred process for producing an ZN olefin polymerization catalyst component in the form of particles having a predetermined size range comprises preparing a solution of a complex of a Gp 2 metal and an electron donor by reacting a compound of said metal with said electron donor or a precursor thereof in an organic liquid reaction medium; reacting said complex, in solution, with a compound of a transition metal to produce an emulsion, the dispersed phase of which contains more than 50 mol% of the Gp 2 metal in said complex; maintaining the particles of said dispersed phase within the average size range 5 to 200$\mu$m by agitation preferably in the presence of an emulsion stabilizer and solidifying said particles; recovering and optionally washing said particles to obtain said catalyst component.

For said ZN catalyst particles, the compound of a transition metal is preferably a compound of a Group 4 metal. The Group 4 metal is preferably titanium, and its compound to be reacted with the complex of a Gp 2 is preferably a halide. In a still further embodiment of the invention a compound of a transition metal can also be selected from Group 5 metals, Group 6 metals, Cu, Fe, Co, Ni and/or Pd. The complex of the Group 2 metal is preferably a magnesium complex.

In a preferred embodiment the process for producing catalysts used in the invention comprises: preparing a solution of magnesium complex by reacting an alkoxy magnesium compound and an electron donor or precursor thereof in a $C_6$-$C_{10}$ aromatic liquid reaction medium; reacting said magnesium complex with a compound of at least one four valent Gp 4 metal at a temperature greater than 10°C and less than 60°C to produce an emulsion of a denser, $TiCl_4$/toluene-insoluble, oil dispersed phase having, Gp 4 metal/Mg mol ratio 0. 1 to 10 in an oil disperse phase having Gp 4 metal/Mg mol ratio 10 to 100; maintaining the droplets of said dispersed phase within the size range 5 to 200 μm by agitation in the presence of an emulsion stabilizer while heating the emulsion to solidify said droplets and optionally adding turbulence minimizing agent into the reaction mixture before solidifying said droplets of the dispersed phase, said turbulence minimizing agent being inert and soluble in the reaction mixture under the reaction conditions; and recovering the obtained olefin polymerization catalyst component.

The turbulence minimizing agent (TMA) or mixtures thereof are preferably polymers having linear aliphatic carbon backbone chains, which might be branched with short side chains only in order to serve for uniform flow conditions when stirring, Said TMA is in particular preferably selected from a-olefin polymers having a high molecular weight of MW about 1-40 x $10^6$, or mixtures thereof. Especially preferred are polymers of alpha-olefin monomers with 6 to 20 carbon atoms, and more preferably polyoctene, polynonene, polydecene, polyundecene or polydodecene or mixtures thereof, having the molecular weight and general backbone structure as defined before, and most preferable TMA is polydecene,

As electron donor compound to be reacted with the Group 2 metal compound is preferably a mono- or diester of an aromatic carboxylic acid or diacid, the latter being able to form a chelate-like structured complex. Said aromatic carboxylic acid ester or diester can be formed in situ by reaction of an aromatic carboxylic acid chloride or diacid dichloride with a $C_2$-$C_{16}$ alkanol and/or diol, and is preferable dioctyl phthalate. The reaction for the preparation of the Group 2 metal complex is generally carried out at a temperature of 20° to 80°C and in case that the Group 2 metal is magnesium, the preparation of the magnesium complex is carried out at a temperature of 50° to 70°C

The electron donor is preferably an aromatic carboxylic acid ester, a particularly favoured ester being dioctyl (2-ethyl-hexyl) phthalate (DOP). The donor may conveniently be formed in situ by reaction of an aromatic carboxylic acid chloride precursor with a $C_2$-$C_{16}$ alkanol and/or diol. The liquid reaction medium preferably comprises toluene.

The emulsion stabiliser is typically a surfactant, of which the preferred class is that based on acrylic polymers.

The alkoxy magnesium compound group is preferably selected from the group consisting of magnesium dialkoxides, complexes of a magnesium dihalide and an alcohol, and complexes of a magnesium dihalide and a magnesium dialkoxide, it may be a reaction product of an alcohol and a magnesium compound selected from the group consisting of dialkyl magnesiums, alkyl magnesium alkoxides, alkyl magnesium halides and magnesium dihalides. It can further be selected from the group consisting of dialkyloxy magnesiums, diaryloxy magnesiums, alkyloxy magnesium halides, aryloxy magnesium halides, alkyl magnesium alkoxides, aryl magnesium alkoxides and alkyl magnesium aryloxides.

The magnesium dialkoxide may be the reaction product of a magnesium dihalide such as magnesium dichloride or a dialkyl magnesium of the formula $R_2Mg$ wherein each one of the two Rs is a similar or different $C_1$-$C_{20}$ alkyl, preferably a similar or different $C_4$-$C_{10}$ alkyl, Typical magnesium alkyls are ethylbutyl magnesium, dibutyl magnesium, dipropyl magnesium, propylbutyl magnesium, dipentyl magnesium, butylpentylmagnesium, butyloctyl magnesium and dioctyl magnesium. Most preferably, one R of the formula $R_2Mg$ is a butyl group and the other R is an octyl group, i.e. the dialkyl magnesium compound is butyl octyl magnesium.

Typical alkyl-alkoxy magnesium compounds RMgOR, when used, are ethyl magnesium butoxide, butyl magnesium pentoxide octyl magnesium butoxide and octyl magnesium octoxide.

Dialkyl magnesium, alkyl magnesium alkoxide or magnesium dihalide can react with a polyhydric alcohol R'$(OH)_m$ or a mixture thereof with a monohydric alcohol R'OH.

Typical $C_2$ to $C_6$ polyhydric alcohols may be straight-chain or branched and include ethylene glycol, propylene glycol, trimethylene glycol, 1,2-butylene glycol, 1,3-butylene glycol, 1,4-butylene glycol, 2,3-butylene glycol, 1,5-pentanediol, 1,6-hexanediol, 1,8-octanediol, pinacol, diethylene glycol, triethylene glycol, and triols such as glycerol, methylol propane and pentareythritol. The polyhydric alcohol can be selected on the basis of the activity and morphology it gives the catalyst component.

The aromatic reaction medium may also contain a monohydric alcohol, which may be straight- or branched-chain. Typical $C_1$-$C_{20}$ monohydric alcohols are methanol, ethanol, n-propanol, iso-propanol, n-butanol, iso-butanol, sec.butanol, tert.butanol, n-amyl alcohol, iso-amyl alcohol, sec-amyl alcohol, tert.amyl alcohol, diethyl carbinol, akt. amyl alcohol, sec.isoamyl alcohol, tert.butyl carbinol. Typical $C_6$-$C_{10}$ monohydric alcohols are hexanol, 2-ethyl-lbutanol, 4-methyl-2-pentanol, 1-heptanol, 2-heptanol, 4-heptanol, 2,4-dimethyl-3pentanol, 1-octanol, 2-octanol, 2-ethyf-i-hexanol, 1-nonanol, 5-nonanol, dilsobutyl carbinol, 1-decanol and 2,7-dimethyl-2-octanol. Typical >$C_{10}$ monohydric alcohols are n-1-undecanol, n-1-dodecanol, n-1-tridecanol, n-1-tetradecanol, n-1-pentadecanol, 1-hexadecanol, n-1-heptadecanol and n-1 octadecanol. The monohydric alcohols may be unsaturated, as long as they do not act as catalyst poisons.

Preferable monohydric alcohols are those of formula R'OH in which R' is a $C_2$-$C_{16}$ alkyl group, most preferably a $C_4$-$C_{12}$ alkyl group, particularly 2-ethyl-1-hexanol.

Preferably, essentially all of the aromatic carboxylic acid ester is a reaction product of a carboxylic acid halide, preferably a dicarboxylic acid dihalide, more preferably an unsaturated $\alpha,\beta$-dicarboxylic acid halide, most preferably phthalic acid dichloride, with the monohydric alcohol.

The finally obtained catalyst component is desirably in the form of particles having an average size range of 5 to 200 $\mu$m, preferably 10 to 100, more preferably 15 to 50 $\mu$m. The catalyst particles are non-porous, i.e. their surface area is very small compared to prior art ZN catalysts supported on an external donor. The surface area of the catalyst used in the present invention is smaller than 15 $m^2$/g, preferable less than 10 $m^2$/g, and more preferably less than 5 $m^2$/g. The surface area is so small that it is generally not measurable by normal measurement apparatus, where the lowest measuring limit is 5 $m^2$/g. This applies also to the porosity. The commercial supported catalysts normally used in the art have a surface area generally higher than 200 $m^2$/g, or even higher than 300 $m^2$/g, i.e. in a totally different range. The active components of the catalysts are evenly distributed thorough the whole catalyst particles, whereas in the supported catalysts the active sites are situated only on the surface of the particles, wherefore a porous structure is needed to get activity for the catalyst.

The catalyst system used in the present invention comprises a catalyst component prepared as aforesaid, in association with an alkyl aluminium cocatalyst and external donors, and is used for the polymerization of propylene optionally with other monomers, such as $C_2$ to $C_{12}$-olefins.

In accordance with the present invention, the polymer matrix of the first stage preferably comprises propylene homopolymer. However, a propylene random copolymer matrix with a small amount of higher $\alpha$-olefin comonomer, i. e. $C_4$-$C_{12}$, preferably $C_4$-$C_8$ $\alpha$-olefin, is also possible. The amount of these comonomers is no more than 5 wt%, preferably no more than 2 wt%.

In the second stage the rubber part of the polymer is formed in the presence of the polymer matrix from the first stage by polymerizing propylene with ethylene and/or another higher $\alpha$-olefin. Preferably ethylene is used as comonomer.

The amount of matrix component in the heterophasic polymers of the present invention is between 50 to 95%, preferably 55 to 90%, more preferably 60 to 80% by weight of the heterophasic polymer. The amount of stage 2 polymer may be in a range of 5 to 50%, preferably 10 to 45% by weight, more preferably 20 to 40 % by weight of the heterophasic polymer.

In a preferred embodiment of the invention, the amount of ethylene in the rubber component is 15 to 70 wt-%, preferably 25 to 60 wt%, more preferably 30 to 50 wt%. Instrinsic viscosity (IV) of the rubber part may be 1 -6 dl/g, preferably 2-4 dl/g.

As discussed above, the process of the invention is carried out in at least two stages. The first stage may comprise at least one slurry reactor, preferably a loop reactor, and optionally at least one gas phase reactor, preferably one gas phase reactor. The slurry reactor may be a bulk reactor, where the reaction medium is propylene. The second stage comprises at least one gas phase reactor, which is usually and also in this application called a rubber phase reactor.

It is also possible that the first stage comprises only a bulk reactor, where the polymer matrix is formed, and the first gas phase reactor acts as a rubber phase reactor (the second stage). However, it is more usual, that the first stage comprises one bulk and one gas phase reactor. The polymer matrix is preferably formed from propylene homopolymers and the rubber phase comprises a copolymer of propylene with ethylene.

As noted earlier in this application, the bulk density of the catalyst correlates with that of the polymer produced in the slurry phase, and further with the slurry density of the slurry reactor. It is well-known to anyone skilled in the art that the production capacity in the slurry reactor, e.g. loop reactor, increases as the solids concentration in the loop reactor is increased. But, for obvious reasons there is a limit to the highest amount of the solids concentration. If the process is run at too high a solids concentration (volume of polymer per volume liquid + polymer), the mixture cannot be pumped or removed, resulting in plugging of the loop. The production capacity in the loop can be increased if the density of the single polymer particles, which correlates with the bulk density of the polymer powder, is increased. The higher the density of the single polymer particles the higher the solids concentration, expressed as weight of polymer per weight of solid + polymer. A higher solids concentration means longer residence time in the loop and of course a higher production capacity.

According to the the present invention, the bulk density of the polymers of the slurry reactor may be 480 to 560 kg/$m^3$, preferably 490 to 540 kg/$m^3$, and more preferably 500 to 530 kg/$m^3$.

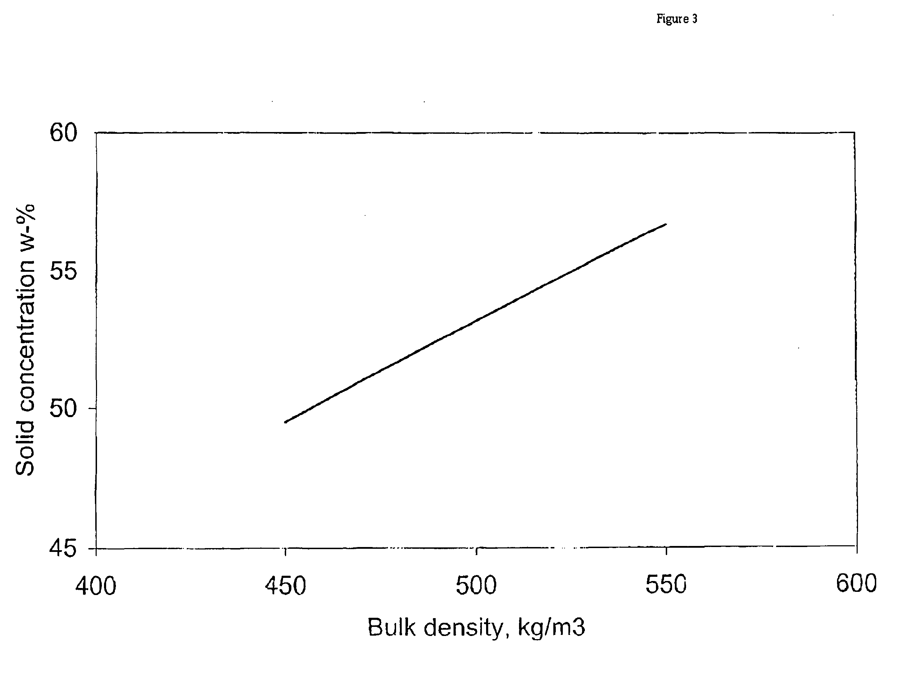

The principle of the correlation between polymer bulk density in the slurry reactor and solids concentration is shown in Figure 3.

According to one embodiment of the invention the polymerization conditions for the slurry reactor of the first stage may be as follows:

- the temperature is within the range of 40°C to 110°C, preferably between 60°C and 90°C,
- the pressure is within the range of 20 bar to 80 bar, preferably between 30 bar to 60 bar,
- hydrogen can be added for controlling the molar mass in a manner known per se.

The reaction mixture from the slurry (bulk) reactor is transferred to the gas phase reactor of the first stage polymerization. The polymerization conditions in the gas phase reactor may be as follows:

- the temperature is within the range of 50°C to 130°C, preferably between 60°C and 100°C.
- the pressure is within the range of 5 bar to 50 bar, preferably between 25 bar to 35 bar,
- hydrogen can be added for controlling the molar mass in a manner known per se.

The polymerization conditions in the rubber gas phase reactor (the second stage) can be the same as in the gas phase reactor of the first stage.

The melt flow rates, MFR, corresponding to the molecular weights of the polymer, can vary in wide ranges depending e.g. on the comonomer contents in the polymer. MFRs of the propylene polymers are measured according to ISO 1133 standard method and at 230°C, with 2,16 kg load ($MFR_2$). The polymer composition prepared according to the present process can have a $MFR_2$ in the range of 0.03 to 2000 g/min, preferably 0.03 to 1000 g/10 min, most preferably 0.2 to 400 g/10 min.

The present invention will now be described by way of example and with reference to:

Figure 1 which is a plot showing ethylene distribution across a single particle in Example 8;

Figure 2 which shows the eight analysis points in a slice of a single particle, the results of the analysis being disclosed in Figure 1.

Figure 3 which shows the correlation between the bulk density of the polymer and the solid concentration of the slurry reactor. In the calculations underlying this figure the solid concentration, expressed as volume polymer per volume liquid + polymer, is fixed at 40%. The volume of the polymer in the calculation is based on the diameter of the particles. The only parameter that changes is density of the single polymer particles, which is expressed as bulk density in the figure; and

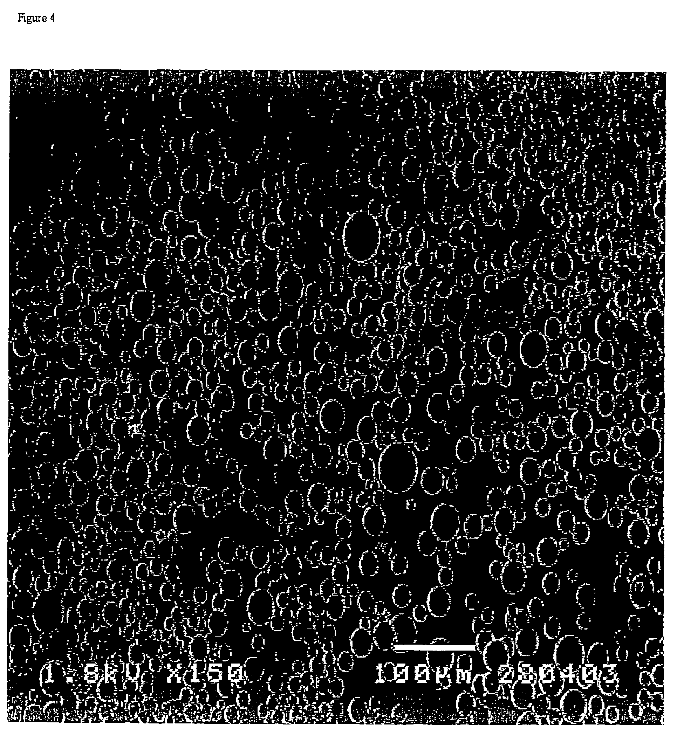

Figure 4 which shows the uniform and non-porous structure of the catalyst particles used in the present invention.

The following measuring methods were used in the examples:

- Surface area and porosity were determined by BET method ASTM D4641, temperature 50°C, (Micrometrics Tristar 3000, adsorption gas $N_2$)
- XS (sylene solubles) and AM (amorphous part) were analysed by the process:
  2.0 g of polymer was dissolved in 250 ml p-xylene at 135°C under agitation. After 30±2 minutes the solution was allowed to cool for 15 minutes at ambient temperature and then allowed to settle for 30 minutes at 25±0.5°C. The solution was filtered with filter paper into two 100 ml flasks.

The solution from the first 100 ml vessel was evaporated in nitrogen flow and the residue dried under vacuum at 90°C until constant weight is reached.

$$XS\% = (100 \times m_1 \times v_0) / (m_0 \times v_1)$$

$m_0$ = initial polymer amount (g)
$m_1$ = weight of residue (g)
$v_0$ = initial volume (ml)
$V_1$ = volume of analysed sample (ml)

The solution from the second 100 ml flask was treated with 200 ml of acetone under vigorous stirring. The precipitate was filtered and dried in a vacuum oven at 90°C.

$$AM\% = (100 \times m_2 \times v_0) / (m_0 \times v_1)$$

$m_0$ = initial polymer amount (g)
$m_1$ = weight of precipitate (g)

$v_0$= initial volume (ml)
$V_1$= volume of analysed sample (ml)

- IV of AM: IS01628
- MFR: ISO 1133 (230°C, 2,16 kg load)
- Bulk density of polymer powder ASTM D 1895
- Thermal properties of polymer were analysed with a differential scanning calorimeter and according to the method: Melting temperature $T_m$, crystallisation temperature $T_c$, and the degree of crystallinity were measured with Mettler TA820 differential scanning calorimetry (DSC) on $3\pm0.5$ mg samples. Both crystallisation and melting curves were obtained during 10°C/min cooling and heating scans between 30°C and 225°C. Melting and crystallisation temperatures were taken as the peaks of endotherms and exotherms. The degree of crystallinity was calculated by comparison with heat of fusion of a perfectly crystalline polypropylene, i.e. 209 J/g.
- Flexural modulus: ISO 178/room temperature (if not otherwise mentioned)
- Tensile modulus ISO527
- Charpy notched impact ISO 179 (room temperature, if not otherwise informed)
- Polymer particle size distribution was measured by sieving
- Catalyst particle size distribution was measured with Coulter LS200

Example 1

All raw materials were essentially free from water and air and all material additions to the reactor and the different steps were done under inert conditions in nitrogen atmosphere. The water content in propylene was less than 5 ppm.

The catalyst used in this example is a highly active and stereospecific Ziegler Natta catalyst (ZN catalyst). The ZN catalyst was prepared according to patent WO03/000754, Example 8, and had Ti content 2,52 w-%. The surface area of the catalyst was < 5 $m^2$/g, it being below the measurement limit. Also being below the measurement limit, porosity was so low that it was not measurable.

The polymerization was done in a 5 liter reactor, which was heated, vacuumed and purged with nitrogen before taken into use. 314 µl TEA (tri ethyl Aluminium, from Witco used as received), 46 µl donor C (cyclo hexyl methyl dimethoxy silane from Wacker, dried with molecular sieves) and 30 ml pentane (dried with molecular sieves and purged with nitrogen) were mixed and allowed to react for 5 minutes. Half of the mixture was added to the reactor and the other half was mixed with 17,2 mg ZN catalyst. After about 10 minutes was the ZN catalyst/TEA/donor D/pentane mixture added to the reactor. The Al/TI molar ratio was 250 and the Al/Do (cocatalyst/donor) molar ratio was 10.70 mmol hydrogen and 1400 g were added to the reactor. The temperature was increased from room temperature to 70°C during 20 minutes. The reaction was stopped, after 60 minutes at 70°C, by flashing out unreacted propylene. Finally the polymer powder was taken out from the reactor and analysed and tested. The MFR of the product was 4,8 and bulk density 500 kg/$m^3$. The details and results are seen in Table 1.

Example 2

This example was done in accordance with Example 1, with the difference that a different catalyst lot was used. The Ti content in the catalyst was 2,96 w-%. The surface are of the catalyst was < 5 $m^2$/g and porosity was so low that not measurable. The MFR of the product was 4,7 g/10 min and bulk density 510 kg/$m^3$. The surface area of the polymer powder was < 5$m^2$/g (not measurable).

Comparative Example 1

This example was prepared in accordance with Example 1, with the exception that a supported porous catalyst was used. The catalyst used was a typical porous 4th generation, transesterified Ziegler Natta catalyst for producing homo, random and heterophasic PP products. This type of catalysts is described in general in EP 491 566 and EP 856 390, and was prepared as follows:
1100 kg of TiCl$_4$ was fed to a reactor and cooled to -20°C. 77 kg of the MgCl$_2$ carrier obtained by spray-crystallizing MgCl$_2$(C$_2$H$_5$OH)$_n$ melt was suspended in 223 kg aliphatic hydrocarbon solvent (bp. 90-110°C) and cooled before adding it to the cold EiCl$_4$. Controlled heating to 130°C was performed. During heating di-2-ethyl-hexyl phthalate (DOP) was added, and transesterification (DOP to DEP, diethyl phthalate) effected by keeping the mixture for 30 minutes at 130°C. The solid was separated by filtration. The procedure was repeated 3 time, each repeat adding the TiCl4 to the filtered solid recovered from the previous titanation. The catalyst, resulting from the third repeat, was washed 4 times with the aliphatic hydrocarbon solvent and dried in vacuum to free flowing powder. The surface area and porosity of a catalyst produced was typically 250-300 m$^2$/g and 0,4-0,5 g/cm$^3$, respectively. The catalyst contained 2,1 w-% titanium. The bulk density of the polymer was 470 kg/m$^3$. Other details are shown in Table 1.

Comparative Example 2

This example was done in accordance with Example 1, with the exception that a porous commercially available catalyst was used. This catalyst can be described as a typical porous 4th generation Ziegler Natta catalyst for producing homo, random and heterophasic PP products. The Ti content of this catalyst was 2,4 w-%. The average catalyst particle size is 60μm. The bulk density of the polymer was 450 kg/m$^3$. The other details are shown in Table 1.

| | | Example 1 | Example 2 | Comparative Example 1 | Comparative Example 2 |
|---|---|---|---|---|---|
| Catalyst surface area | m$^2$/g | <5[a) | <5[a) | 250-300 | high |
| Catalyst porosity | ml/g | n.m.[a) | n.m.[a) | 0,4-0,5 | high |
| Catalyst average size | μm | 15,9 | 19,1 | 74 | 60 |
| Activity | kgPP/gcath | 29,4 | 30,1 | 20,1 | 34,5 |
| MFR | g/10 min | 4,8 | 4,7 | 4,6 | 7,9 |
| XS | w-% | 1,5 | 2 | 1,6 | 3,2 |
| Bulk density | kg/m$^3$ | 500 | 510 | 470 | 450 |
| Particle size distribution of the polymer | | | | | |
| 0-0,056 mm | % | 0 | 0 | 0 | 0 |
| 0,056-0,100 mm | % | 0,1 | 0,1 | 0 | 0 |
| 0,100-0,180 mm | % | 0,6 | 0,3 | 0,1 | 0,2 |
| 0,180-0,500 mm | % | 41,1 | 27,6 | 0,4 | 1,7 |
| 0,500-1,0000 mm | % | 56,8 | 63,1 | 3,6 | 5,1 |
| 1,00-2,00 mm | % | 1 | 8,6 | 35,4 | 47,5 |
| 2,00-4,00 mm | % | 0,1 | 0,4 | 59,0 | 44,9 |
| > 4,00 mm | % | 0 | 0,1 | 1,5 | 0,6 |

[a)    Below the detection limit of the used equipment

n.m    not measurable

## TABLE 1

From comparison of homo PP produced with the compact catalyst in this invention (Example 1) with other porous catalysts (comparative Examples 1 and 2) it can be clearly seen that the catalyst of this invention gives polymers with much higher bulk densities.

Example 3

This example was done in accordance with Example 1, with the exception that the hydrogen amount was 700 mmol and that donor D (dicyclo pentyl dimethoxy silane) was used as external donor. The catalyst in this example contained 2,84 w-% Titanium. MFR of the polymer was 88. Other details are seen in Table 2.

Example 4

This example was done in accordance with Example 3, but after having flashed out unreacted propylene after the bulk polymerization step the polymerization was continued in gas phase. In the gas phase step ethylene/propylene rubber was produced. The reactor was first pressurised, up to 2 bars, and purged five times with a 0,70 mol/mol ethylene/propylene gas mixture. Thereafter 50 mmol hydrogen was added. Finally the pressure was increased to 20 bar with the same ethylene/propylene mixture and temperature was increased to 70°C during 10 minutes. A sample of the gas in the reactor towards the end of the polymerization was analysed with gas chromatograph showed that the ethylene/propylene ratio in the reactor was 0,52 mol/mol. After 35 minutes the reaction was stopped by flashing out unreacted propylene. The polymeric powder was free flowing both in the reactor (observed through the window) during the polymerization and after polymerization. The polymeric product was stabilised, analysed and tested. The amount of rubber (~AM part of the sample) in the product was about 28 w-% and the ethylene content in the rubber ($AM/C_2$) was 40 w-% and intrinsic viscosity was 3,5 dl/g. Other details are seen in.

Example 5

This example was done in accordance with Example 4, with the exception that the hydrogen amount in the gas phase was 120 mmol. The amount of rubber in the product was 27 w-%, ethylene content in the rubber 39 w-% and IV of rubber 2,3. The polymeric powder was free flowing both in reactor and after reaction. Other details are seen in Table 2.

Example 6

This example was done in accordance with Example 5, with the exception that the ethylene/propylene ratio in the feed to the gas phase polymerization was 0,87 mol/mol The amount of rubber in the product was 37 w-%, ethylene in the rubber was 43 w-% and IV of rubber 2,7 The polymeric powder was free flowing both in reactor and after reaction. Other details are seen in Table 2.

Example 7

This example was done in accordance with Example 5, with the exception that the ethylene/propylene ratio in the feed to the gas phase polymerization was 1,2 mol/mol. The amount of rubber was 28 w-%, ethylene in rubber 49 w-% and IV of rubber 2,6. The polymeric powder was free flowing both in reactor and after reaction. Other details are seen in Table 2.

TABLE 2

| | | Example 3 | Example 4 | Example 5 | Example 6 | Example 7 |
|---|---|---|---|---|---|---|
| | | | | | | |
| Catalyst amount | md | 13,6 | 17,4 | 27,6 | 19,7 | 27,6 |
| **Bulk polymerisation** | | | | | | |
| Time | min | 60 | 30 | 30 | 30 | 30 |
| Activity | kgPP/gcath | 25,8 | | | | |
| **Gas phase polymerisation** | | | | | | |
| Time | min | - | 35 | 27 | 45 | 30 |
| hydrogen | mmol | - | 50 | 120 | 120 | 120 |
| $C_2/C_3$ in feed | mol/mol | - | 0,7 | 0,72 | 0,87 | 1,2 |
| **Product properties** | | | | | | |
| Total yield | g | 351 | 573 | 692 | 566 | 692 |
| MFR | g/10min | 88 | 9,4 | 19,8 | 10,3 | 15,3 |
| XS | w-% | 1,7 | 31,4 | 27,8 | 38 | 29,9 |
| AM | w-% | - | 30,2 | 26,7 | 36,9 | 28,1 |
| Total ethylene | w-% | - | 13,2 | 11,1 | 17 | 14,4 |
| $AM/C_2$ | w-% | - | 40,1 | 39,1 | 43,3 | 49 |
| AM/IV | dl/g | - | 3,5 | 2,3 | 2,7 | 2,6 |

TABLE 2   (continued)

| | | Example 3 | Example 4 | Example 5 | Example 6 | Example 7 |
|---|---|---|---|---|---|---|
| Tm | °C | 161,6 | 163,1 | 162,6 | 163,4 | 162,6 |
| Crystallinity | % | 53 | 36 | 35 | 29 | 35 |
| Flexural stiffness | MPa | - | 830 | 905 | 684 | 902 |
| Charpy notched impact (-20°C) | kJ/m$^2$ | - | - | 10 | 25 | 12,4 |

Example 8

This example was done in a continuously working pilot plant, comprising the following reactors in series: prepolymerizer, loop, gas phase 1 and gas phase 2. The catalyst was prepared according to patent W003/000754 and had Ti content 3,0 w-%. The catalyst was modified with vinyl cyclo hexane according to patent WO 00/68315 prior to use in the polymerization pilot.

Donor D was used as external donor with Al/Do (cocatalyst/donor) molar ratio 10 and TEA was used as cocatalyst with Al/Ti molar ratio 108 in the polymerization pilot. The catalyst was activated with 10% of the TEA feed in the pipeline to the prepolymerizer and the activation time was about 15 seconds. The catalyst was flushed to the continuous prepolymerizer with propane. Propylene, external donor and the remaining 90% of the TEA feed was fed to the prepolymerizer. The hydrogen concentration was 0,2 mol-%. The temperature was 30°C, pressure 55 bar and residence time of the liquid in the prepolymerizer 16 minutes.

The temperature in the loop was 80°C, pressure 55 bar, hydrogen/propylene ration 22 mol/kmol and residence time 30 minutes.

The temperature in the first gas phase reactor was 80°C, total pressure 27 bar, propylene partial pressure 20 bar, hydrogen/propylene ratio 150 mol/kmol and residence time 90 minutes. MFR and XS of a polymer sample taken from the first gas phase reactor was 210 g/10 minutes and 2,0 w-%, respectively.

The temperature in the second gas phase reactor (rubber reactor) was 70°C, total pressure 28 bar, propylene partial pressure 14 bar, ethylene/propylene molar ratio 0,40, hydrogen/ethylene molar ratio 0.32 and residence time 90 minutes. MFR of the final product was 90g/10 min, XS 21,1 w-%, AM 20,7 w-%, ethylene in AM 33 w-% and IV of AM 1,8 dl/g. The polymeric powder was free flowing and there was no problem to transfer the polymer powder between reactors or between rubber reactor and silos. The tensile modulus of the product was at room temperature 1250 MPa and Charpy notched impact at 0°C was 4,4 kJ/m$^2$.

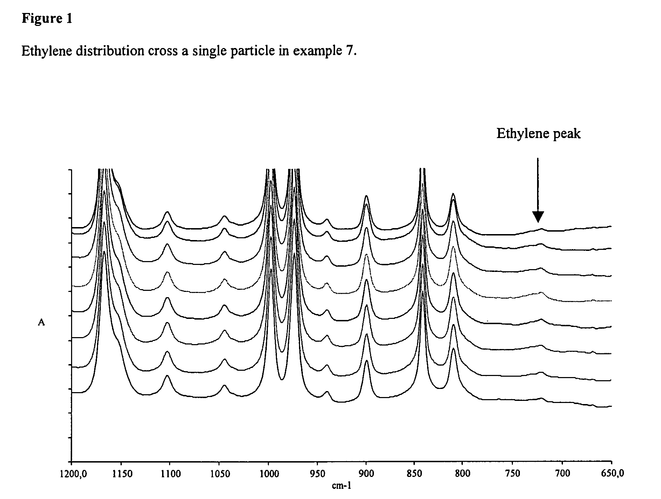

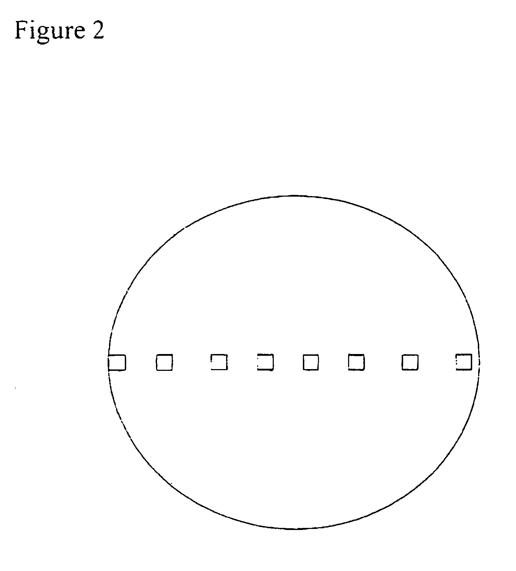

Analyses of the ethylene content of a cross-section slice (ca 50 μm thick) from a single (see Figure 1) particle shows that ethylene is evenly distributed throughout the particle. Eight separate analyses of the ethylene content from a single particle (diameter 1.5 mm) were carried out as is indicated in Figure 2. The circle represents the round slice and the 8 squares represent the area of analysis in each test. The area of analysis in each test was about 0.05 x 0.05 mm. Analyses were done with infra red spectrometry. When comparing the eight spectrograms of Figure 1, it can easily be seen that the ethylene/propylene rubber is evenly distributed throughout the particle and not concentrated in the surface regions. In the latter case severe stickiness problems would be expected.

**Claims**

**1.**   A process for the production of heterophasic polyolefin compositions comprising the steps of:

- in a first stage, forming a propylene polymer matrix in at least one slurry reactor and optionally in at least one gas phase reactor;
- in a second stage, copolymerizing propylene with ethylene and/or with another, α-olefin in the presence of the polymer matrix in at least one gas phase reactor;

   **characterised in that**:

- the polymerization is carried out in the presence of solid, non-porous catalyst with a surface area of less than 15 m$^2$/g, the catalyst component comprising a compound of a transition metal of Group 3 to 10 of the Periodic Table, or actinide or lanthanide obtainable by a method comprising the steps:

d) forming a liquid/liquid emulsion system, which contains a homogenous solution of at least one catalyst component, said solution being dispersed in a solvent immiscible therewith and forming the dispersed phase of the liquid/liquid emulsion system;
e) solidifying said dispersed droplets to form solid catalyst particles having a predetermined size range; and
f) removing the solvent from the reaction mixture in order to obtain said solid catalyst particles

and, optionally, one or more additional cocatalysts, and external donors; and wherein the polymer produced in said slurry reactor has a bulk density of at least 480 kg/m$^3$.

2. A process according to claim 1, wherein the propylene polymer matrix is a propylene homopolymer.

3. A process according to claim 1, wherein the propylene polymer matrix is a propylene polymer with a small amount of higher $\alpha$-olefins.

4. A process according to claim 3, wherein the $\alpha$-olefins are $C_4$-$C_{12}$ olefins.

5. A process according to claim 4, wherein the $\alpha$-olefins are $C_4$-$C_8$ $\alpha$-olefins.

6. A process according to claim 5, wherein the $\alpha$-olefins are selected from the group consisting of 1-butene, 1-pentene and 1-hexene.

7. A process according to any one of the preceding claims, wherein in the second stage propylene is copolymerized with ethylene.

8. A process according to any one of the preceding claims, wherein the polymers are produced in a two stage polymerization process.

9. A process according to claim 7, wherein the first stage comprises forming the polymer matrix in one slurry reactor.

10. A process according to claim 7, wherein the first stage comprises forming the polymer matrix in at least one slurry reactor and at least one gas phase reactor.

11. A process according to claim 9 or 10, wherein the slurry reactor is a bulk reactor, preferably a loop reactor.

12. A process according to any one of the preceding claims, wherein the first stage process is carried out at a temperature of 40°C to 110°C.

13. A process according to claim 12, wherein the temperature is 60°C to 90°C.

14. A process according to any one of the preceding claims, wherein the first stage process is carried out at a pressure of 20 bar to 80 bar.

15. A process according to claim 14, wherein the pressure is 30 bar to 60 bar.

16. A process according to any one of the preceding claims, wherein the second stage is carried out in a gas phase reactor.

17. A process according to any one of the preceding claims, wherein the second stage is carried out at a temperature of 50°C to 130°C.

18. A process according to claim 17, wherein the temperature is 60°C to 100°C.

19. A process according to any one of the preceding claims, wherein the second stage is carried out at a pressure of 5 bar to 50 bar.

20. A process according to claim 19, wherein the pressure is 25 bar to 35 bar.

21. A process according to any of claims 1 to 16, wherein the process conditions of the second stage are the same as those of the gas phase at the first stage.

22. A process according to any one of the preceding claims, wherein hydrogen is added to control the molar mass of the polymers.

23. A heterophasic polyolefin polymer produced according to the process of any one of the preceding claims.

24. A polymer according to claim 23, wherein the product of the slurry reactor of the first stage has a bulk density of at least 480 kg/m$^3$.

25. A polymer according to claim 24, wherein the bulk density is 480 to 560 kg/m$^3$.

26. A polymer according to claim 25, wherein the bulk density is 490 to 540 kg/m$^3$.

27. A polymer according to claim 26, wherein the bulk density is 500 to 530 kg/m$^3$.

28. A polymer according to any one of claims 23 to 27, wherein the product of the first stage comprises up to 5 wt% of higher $\alpha$-olefin.

29. A polymer according to claim 28, wherein the product comprises up to 2 wt% of higher $\alpha$-olefm.

30. A polymer according to any one of claims 23 to 29, wherein the composition comprises 50 to 95% by weight of heterophasic polymer of matrix component.

31. A polymer according to claim 30, wherein the composition comprises 55 to 90% by weight of heterophasic polymer of matrix component.

32. A polymer according to claim 31, wherein the composition comprises 60 to 80% by weight of heterophasic polymer of matrix component.

33. A polymer according to any one of claims 23 to 32, wherein the composition comprises 5 to 50% by weight of heterophasic polymer of second stage polymer.

34. A polymer according to claim 33, wherein the composition comprises 10 to 45% by weight of heterophasic polymer of second stage polymer.

35. A polymer according to claim 34, wherein the composition comprises 20 to 40% by weight of heterophasic polymer of second stage polymer.

36. A polymer according to any one of claims 23 to 35, wherein the polymer comprises 15 to 70 wt% of ethylene in the rubber part.

37. A polymer according to claim 36, wherein the polymer comprises 25 to 60 wt% of ethylene in the rubber part.

38. A polymer according to claim 37, wherein the polymer comprises 30 to 50 wt% of ethylene in the rubber part.

39. A polymer according to any one of claims 23 to 38, wherein the rubber part of the polymer has an intrinsic viscosity of 1 to 6d1/g.

40. A polymer according to claim 39, wherein the intrinsic viscosity is 2 to 4dl/g.

41. A polymer according to any one of claims 23 to 40, wherein the MFR$_2$ is in the range of 0.03 to 2000 g/min.

42. A polymer according to claim 41, wherein the MFR$_2$ is 0.03 to 1000 g/10 min.

43. A polymer according to claim 42, wherein the MFR$_2$ is 0.2 to 400 g/10 min.

**Figure 1**

Ethylene distribution cross a single particle in example 7.

Figure 2

Figure 3

EP 1 598 377 A1

Figure 4

**EP 1 598 377 A1**

European Patent Office

# EUROPEAN SEARCH REPORT

Application Number

EP 04 01 2108

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WO 03/000755 A (DENIFL PETER ; GAROFF THOMAS (FI); LEINONEN TIMO (FI); PESONEN KARI (F) 3 January 2003 (2003-01-03) * page 6, lines 10-15 - page 7, lines 1-9 * ----- | 1-43 | C08F10/00 C08L23/10 |
| Y | US 6 689 846 B1 (ALASTALO KAUNO ET AL) 10 February 2004 (2004-02-10) * column 8, lines 23-27; table 1 * ----- | 1-43 | |
| A | WO 02/096558 A (UNION CARBIDE CHEM PLASTIC) 5 December 2002 (2002-12-05) * page 15, line 20 - page 16, line 8; example 2; table 2 * ----- | 1-43 | |
| A | WO 01/36502 A (JAEAESKELAEINEN PIRJO ; MALM BO (FI); BOREALIS TECH OY (FI); VESTBERG) 25 May 2001 (2001-05-25) * examples 1-6 * ----- | 1-43 | |

TECHNICAL FIELDS SEARCHED (Int.Cl.7)

C08F
C08L

The present search report has been drawn up for all claims

| Place of search | Date of completion of the search | Examiner |
|---|---|---|
| The Hague | 20 October 2004 | Schmidt, H |

EPO FORM 1503 03.82 (P04C01)

## ANNEX TO THE EUROPEAN SEARCH REPORT
## ON EUROPEAN PATENT APPLICATION NO.

EP 04 01 2108

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2004

| Patent document cited in search report | | Publication date | Patent family member(s) | | Publication date |
|---|---|---|---|---|---|
| WO 03000755 | A | 03-01-2003 | EP | 1273595 A1 | 08-01-2003 |
| | | | BR | 0210400 A | 17-08-2004 |
| | | | BR | 0210403 A | 17-08-2004 |
| | | | CA | 2447592 A1 | 03-01-2003 |
| | | | CA | 2447644 A1 | 03-01-2003 |
| | | | WO | 03000754 A1 | 03-01-2003 |
| | | | WO | 03000755 A2 | 03-01-2003 |
| | | | WO | 03000757 A1 | 03-01-2003 |
| | | | EP | 1397401 A1 | 17-03-2004 |
| | | | EP | 1397395 A2 | 17-03-2004 |
| | | | HU | 0400335 A2 | 28-07-2004 |
| US 6689846 | B1 | 10-02-2004 | AT | 270309 T | 15-07-2004 |
| | | | AU | 769562 B2 | 29-01-2004 |
| | | | AU | 4569800 A | 17-11-2000 |
| | | | BR | 0010301 A | 13-02-2002 |
| | | | CA | 2372574 A1 | 09-11-2000 |
| | | | CN | 1359397 T | 17-07-2002 |
| | | | DE | 60011897 D1 | 05-08-2004 |
| | | | EP | 1183285 A1 | 06-03-2002 |
| | | | WO | 0066640 A1 | 09-11-2000 |
| WO 02096558 | A | 05-12-2002 | EP | 1395364 A1 | 10-03-2004 |
| | | | JP | 2004527635 T | 09-09-2004 |
| | | | WO | 02096558 A1 | 05-12-2002 |
| | | | US | 2003064882 A1 | 03-04-2003 |
| WO 0136502 | A | 25-05-2001 | WO | 0136502 A1 | 25-05-2001 |
| | | | AT | 258195 T | 15-02-2004 |
| | | | AU | 1388300 A | 30-05-2001 |
| | | | DE | 69914383 D1 | 26-02-2004 |
| | | | EP | 1244717 A1 | 02-10-2002 |
| | | | US | 6723829 B1 | 20-04-2004 |

EPO FORM P0459

For more details about this annex : see Official Journal of the European Patent Office, No. 12/82